# FASCICULE DE BREVET EUROPEEN

(11) **EP 2 953 445 B1**
(45) Date de publication et mention de la délivrance du brevet: **12.04.2017**
(21) Numéro de dépôt: 14708610.2
(22) Date de dépôt: 04.02.2014
(51) Int. Cl.: A01D 67/00, A01B 59/06

(54) **MACHINE DE FENAISON AVEC UN DISPOSITIF D'ATTELAGE COMPORTANT UN DISPOSITIF DE RAPPEL PERFECTIONNE**
HEUWERBEMASCHINE MIT EINER ANHÄNGEKUPLUNG MIT VERBESSERTER RÜCKHOLVORRICHTUNG
HAYMAKING MACHINE WITH A COUPLING DEVICE COMPRISING AN IMPROVED RETURN DEVICE

(30) Priorité: 07.02.2013 FR 1351030
(43) Date de publication de la demande: 16.12.2015
(73) Titulaire: KUHN S.A., 67700 Saverne (FR)
(72) Inventeur: SPEICH, Cédric, F-67500 Haguenau (FR); SCHOTT, Mathieu, F-67310 Cosswiller (FR)
(74) Mandataire: Esch, Esther Evelyne
(86) Numéro de dépôt international: PCT/FR2014/050192
(87) Numéro de publication internationale: WO 2014/122387

(56) Documents cités:
- DE-A1-102011 007 702
- FR-A1- 2 537 385

## Description

La présente invention se rapporte à une machine de fenaison comportant un châssis supporté directement ou indirectement au sol par des roues et au moins un dispositif de travail relié au châssis, le châssis comportant un dispositif d'attelage auquel sont articulés deux pièces d'attelage portant chacune un tourillon pour l'attelage aux bras inférieurs respectifs d'un tracteur, chaque pièce d'attelage coopérant avec un dispositif de rappel respectif, chaque dispositif de rappel emmagasinant de l'énergie lorsque le tourillon correspondant se déplace, par rapport au dispositif d'attelage, vers le haut depuis une première position, et chaque dispositif de rappel pouvant restituer cette énergie au tourillon correspondant en ramenant le tourillon vers la première position.

Une machine de ce type est vendue par la société PÖTTINGER sous l'appellation « EUROTOP 461 N ». Cette machine, qui est notamment décrite dans le prospectus « Pöttinger EUROTOP - Andaineur » daté de 2012, est un andaineur prévu pour être attelé à l'arrière d'un tracteur. Le dispositif d'attelage comporte un arceau auquel sont articulées en partie basse deux pièces d'attelage qui s'étendent vers l'avant. Chaque pièce d'attelage porte un tourillon. Au-dessus de chacune de ces pièces d'attelage est prévu un support lié à l'arceau. Chaque pièce d'attelage coopère avec un dispositif de rappel respectif. Celui-ci est formé par un tampon en matériau synthétique déformable fixé par en-dessous à chaque support, et disposé entre le support et la pièce d'attelage correspondants. Lorsque le tourillon pivote vers le haut par rapport à l'arceau, le tampon déformable est comprimé. Ce dernier emmagasine donc de l'énergie et peut la restituer au tourillon. De cette manière, le débattement du tourillon vers le haut est dans une certaine mesure contrôlé, et le tourillon est rappelé vers le bas par rapport à l'arceau. En revanche, le débattement vers le bas de chaque pièce d'attelage est limité par une butée métallique. Par conséquent, le dispositif de rappel connu n'emmagasine pas d'énergie lors d'un pivotement vers le bas du tourillon et n'assure pas de fonction de rappel vers le haut dudit tourillon. Lorsqu'au travail, une telle machine évolue à vitesse importante sur un terrain bosselé, elle est animée d'un mouvement de bascule dans un plan vertical parallèle à la direction d'avancement de la machine. Ce mouvement engendre un pivotement des tourillons de bas en haut et vice versa par rapport à l'arceau. En raison de l'absence de rappel vers le haut des tourillons, les mouvements verticaux de l'arceau par rapport au tracteur sont mal contrôlés et la machine est instable. Il en résulte des efforts supplémentaires sur l'attelage du tracteur, sous la forme notamment de chocs et d'à-coups, d'où un inconfort de conduite pour l'utilisateur. En sus, ces mouvements verticaux mal contrôlés peuvent dégrader la qualité de râtelage car les fourches placées à l'avant de la machine tantôt décollent du sol, tantôt grattent le sol et souillent les végétaux déplacés avec de la terre.

La présente invention a pour but de proposer une machine de fenaison qui ne présente pas les inconvénients précités.

A cet effet, une importante caractéristique de l'invention consiste en ce que chaque dispositif de rappel emmagasine de l'énergie lorsque le tourillon correspondant se déplace, par rapport au dispositif d'attelage, vers le bas depuis une deuxième position, et que chaque dispositif de rappel peut restituer cette énergie au tourillon correspondant en ramenant le tourillon vers la deuxième position.

Chaque dispositif de rappel emmagasinant de l'énergie lorsque le tourillon correspondant se déplace vers le haut ou vers le bas, les mouvements verticaux de l'attelage de la machine par rapport aux bras inférieurs du tracteur, sont en grande partie convertis en déformation desdits dispositifs de rappel. La transmission de ces mouvements aux bras inférieurs du tracteur est donc fortement réduite. En particulier, les chocs et secousses sur les bras inférieurs sont grandement atténués. Le confort de conduite de la machine, au travail et au transport, est donc amélioré. De plus, les contraintes mécaniques sur le dispositif d'attelage et le châssis de la machine sont diminuées, d'où une durée de vie prolongée de la machine. En sus, chaque dispositif de rappel pouvant restituer l'énergie qu'il a emmagasinée en ramenant le tourillon correspondant vers sa position initiale, la stabilité de la machine est accrue tant dans un premier plan vertical parallèle à la direction d'avancement, que dans un deuxième plan transversal. La stabilité accrue dans le premier plan autorise une bonne qualité de travail à des vitesses d'avance élevées, car la hauteur des dispositifs de travail par rapport au sol est mieux maîtrisée. Dans le deuxième plan transversal à la direction d'avancement, le dispositif de rappel selon l'invention augmente la stabilité de la machine notamment lorsque les mouvements de repliement des dispositifs de travail de part et d'autre du châssis ne sont pas symétriques. Ainsi, un dispositif de travail placé à gauche du châssis peut être déplacé entre une position de travail basse et une position de transport haute, son homologue droit restant fixe, sans que la machine ne s'incline du côté gauche dans des proportions importantes. Par ailleurs, lorsque la machine emprunte un virage, le roulis qu'elle subit est atténué par l'effort résistant appliqué par chaque dispositif de rappel sur le tourillon correspondant, et par l'effet de rappel des tourillons vers leur position occupée en ligne droite.

D'autres caractéristiques et avantages de l'invention ressortiront de la description ci-après avec référence aux dessins annexés qui représentent plusieurs exemples non limitatifs de réalisation de la machine selon l'invention.

Sur ces dessins :
- la figure 1 représente une vue de dessus d'une réalisation d'une machine selon l'invention ;
- la figure 2 représente une vue partielle en perspective d'un premier exemple de réalisation d'une machine selon l'invention ;
- la figure 3 représente une vue partielle en perspective d'un deuxième exemple de réalisation d'une machine selon l'invention ;
- la figure 4 représente une vue en coupe d'une partie des premier et deuxième exemples de réalisation.

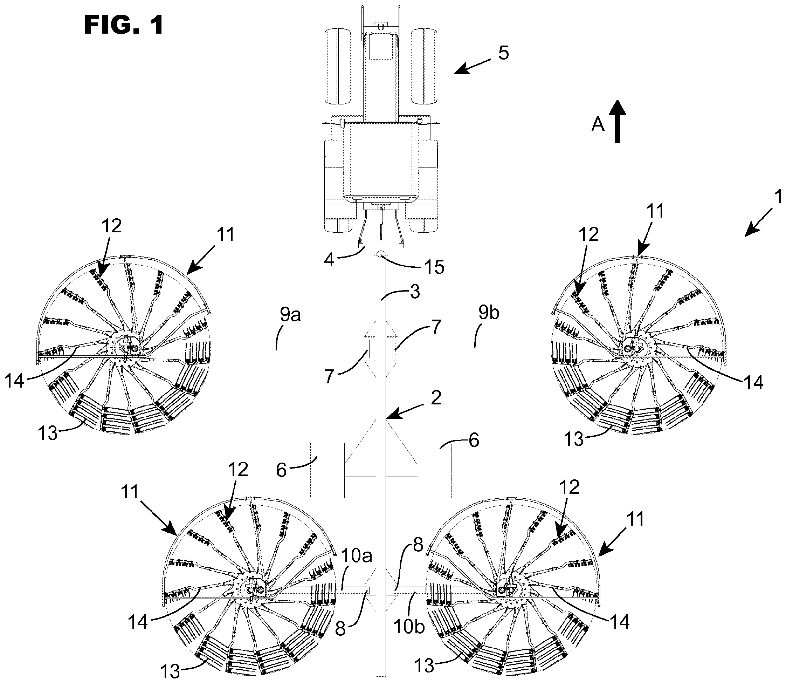

Telle qu'elle est représentée sur la figure 1, la machine (1) selon l'invention comporte un châssis (2) comprenant une poutre centrale (3) qui possède à son extrémité avant un dispositif d'attelage (4) pour l'accrocher à un tracteur (5) permettant de déplacer la machine (1) dans une direction d'avancement (A). Dans la suite de la description, les notions « avant » et « arrière » sont définies par rapport à la direction d'avancement (A), tandis que les notions « bas » et « haut » se rapportent au sol.

Dans la réalisation représentée à la figure 1, le châssis (2) est supporté directement au sol par des roues (6). Ces roues (6) sont montées sur un essieu lui-même relié à la poutre centrale (3). Sur chaque côté de la poutre centrale (3) est articulé, au moyen d'un axe (7, 8) sensiblement horizontal, un bras (9a, 9b, 10a, 10b) qui porte un dispositif de travail (11).

Chaque dispositif de travail (11) de la machine (1) selon l'invention comporte un rotor (12) avec des outils de travail (13) destinés à déplacer des produits tels que de l'herbe ou de la paille fauchée se trouvant sur le sol. Dans l'exemple représenté, la machine (1) est une andaineuse de végétaux au sol. Elle comporte quatre rotors (12). Deux rotors (12) sont placés en avant des roues (6) et deux rotors (12) sont placés en arrière des roues (6). De plus, de chaque côté de la poutre centrale (3) du châssis (2), les bras (9a, 9b, 10a, 10b) ont des longueurs différentes. De cette manière, les rotors (12) placés à l'avant sont plus éloignés de la poutre centrale (3) que les rotors (12) arrière. Les végétaux andainés par le rotor (12) placé le plus en avant sur un côté de la poutre centrale (3) peuvent ainsi être repris par le rotor (12) disposé le plus en arrière du même côté de la poutre centrale (3) pour la formation d'un andain unique de plus grand volume. Suivant une autre réalisation non représentée, la machine (1) selon l'invention pourrait comporter deux rotors (12), l'un étant placé à gauche de la poutre centrale (3) et l'autre étant placé du côté droit. La poutre centrale (3) pourrait aussi ne porter qu'un seul bras et qu'un seul rotor (12). La machine (1) selon l'invention pourrait aussi être un andaineur à un seul rotor (12) dont l'axe de rotation comporte à son extrémité inférieure un support avec des roues porteuses situées sous le rotor (12). Dans ce cas, le châssis (2) de la machine (1) serait indirectement supporté au sol par lesdites roues porteuses.

Chaque rotor (12) comporte un carter. Ce dernier est lié au bras (9a, 9b, 10a, 10b) correspondant. Chaque carter porte un axe de rotation central sensiblement vertical ou légèrement incliné vers l'avant. Cet axe de rotation comporte à son extrémité inférieure un support avec des roues porteuses situées sous le rotor (12). Ces dernières roulent sur le sol durant le travail et font suivre les dénivellations du sol aux rotors (12). Le support et les roues porteuses peuvent avantageusement coulisser le long de l'axe de rotation de manière à régler la distance des outils de travail (13) par rapport au sol, par exemple au moyen d'un vérin.

Sur la partie de l'axe de rotation qui s'étend en-dessous du carter, est disposé un boîtier. Celui-ci est monté sur l'axe de rotation à l'aide de roulements afin de pouvoir être entraîné en rotation. Le côté supérieur du boîtier est muni d'une roue dentée qui se situe dans le carter. Cette roue engrène avec un pignon, lequel peut être relié à une prise de force du tracteur (5) à l'aide d'arbres de transmission intermédiaires connus de l'homme de l'art. L'entraînement en rotation du rotor (12) pourrait également être effectué avec un moteur hydraulique ou électrique. Chaque rotor (12) comporte une multitude de bras (14) portant les outils de travail (13) tels que des fourches. En l'occurrence, il s'agit de bras (14) oscillants supportés par le boîtier. Ces bras (14) s'étendent en forme de rayons par rapport à l'axe de rotation, dans un plan sensiblement perpendiculaire à celui-ci. Les bras (14) oscillants comportent une partie interne liée au boîtier et une partie externe portant les outils de travail (13). Les parties internes des bras (14) oscillants sont liées au boîtier par un ou plusieurs paliers de manière à pouvoir tourner sur elles-mêmes. Sur la partie de l'axe de rotation qui se situe dans le boîtier est montée une came fixe destinée à commander les bras (14) oscillants durant le travail d'andainage. Pour cela, chacun des bras (14) oscillants possède à son extrémité qui s'étend à l'intérieur du boîtier, un levier avec un galet qui est guidé dans une gorge de la came. Au travail, les outils de travail (13) ramassent les produits notamment sur la partie avant de leur trajectoire et les déposent sous la forme d'un andain dans la partie latérale de leur trajectoire.

Chaque bras (9a, 9b, 10a, 10b) est équipé d'un vérin hydraulique qui permet de le pivoter autour de l'axe (7, 8). Chaque vérin hydraulique est articulé avec une de ses extrémités sur la poutre centrale (3) et avec son autre extrémité sur le bras (9a, 9b, 10a, 10b) correspondant. Chaque vérin hydraulique peut être à double effet de manière à pouvoir être commandé lors de l'allongement et lors du raccourcissement, et permet de déplacer le bras (9a, 9b, 10a, 10b) correspondant entre une position de transport et une position de travail. Dans la position de transport, chaque rotor (12) s'étend dans un plan sensiblement vertical ou proche de la verticale, de sorte que l'encombrement de la machine (1) est réduit en largeur. Dans la position de travail, chaque rotor (12) s'étend dans un plan sensiblement horizontal. Chaque rotor (12) peut également être placé dans une position intermédiaire située entre la position de travail et la position de transport. Dans cette position intermédiaire, les rotors (12) sont relevés à quelque distance au-dessus du sol de manière à passer au-dessus d'andains déjà formés ou au-dessus d'obstacles.

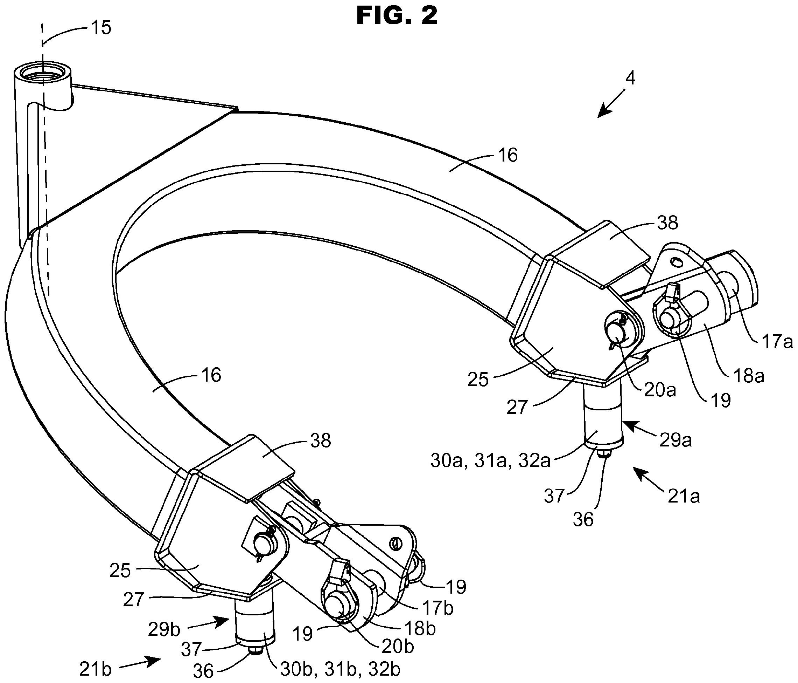

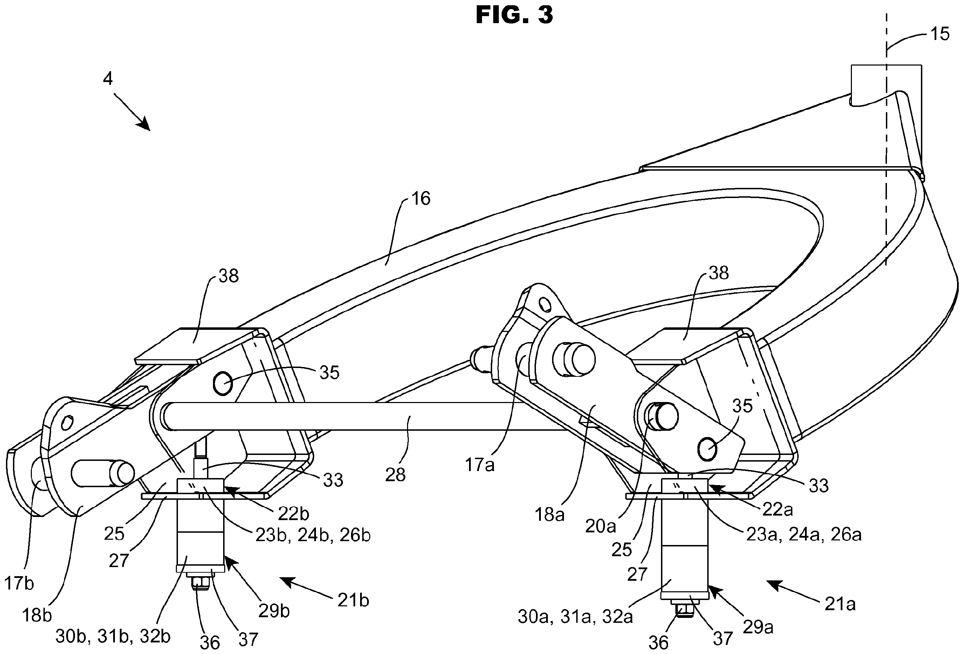

Tel qu'il est représenté sur les figures 2 et 3, le dispositif d'attelage (4) placé à l'avant du châssis (2) est articulé à la poutre centrale (3) du châssis (2) au moyen d'un axe de pivotement (15) qui est par exemple sensiblement vertical ou légèrement incliné vers le haut et vers l'avant. Le dispositif d'attelage (4) comporte deux jambes (16) qui s'étendent en avant dudit axe de pivotement (15) de manière à conférer au dispositif d'attelage (4) une forme d'arceau. Au dispositif d'attelage (4) sont articulées deux pièces d'attelage (18a, 18b) portant chacune un tourillon (17a, 17b) pour l'attelage aux bras inférieurs respectifs du tracteur (5). Chaque pièce d'attelage (18a, 18b) est par exemple en forme de chape. Chaque tourillon (17a, 17b) est lié à la pièce d'attelage (18a, 18b) correspondante de manière démontable au moyen par exemple de goupilles (19) traversant le tourillon (17a, 17b) et placées de part et d'autre de la pièce d'attelage (18a, 18b). Chaque pièce d'attelage (18a, 18b) est articulée à une jambe (16) respective du dispositif d'attelage (4) au moyen d'un axe (20a, 20b) sensiblement horizontal et sensiblement perpendiculaire à la direction d'avancement (A) de la machine (1). Chaque tourillon (17a, 17b) est placé à l'avant dudit axe (20a, 20b) correspondant autour duquel le tourillon (17a, 17b) peut pivoter vers le haut ou vers le bas. Le dispositif d'attelage (4) pourrait aussi porter de manière articulée deux pièces d'attelage (18a, 18b) intégrant chacune le tourillon (17a, 17b), conférant ainsi à chaque pièce d'attelage (18a, 18b) une forme en L.

Selon l'invention, chaque pièce d'attelage (18a, 18b) coopère avec un dispositif de rappel (21a, 21b) respectif. Chaque dispositif de rappel (21a, 21b) emmagasine de l'énergie lorsque le tourillon (17a, 17b) correspondant se déplace, par rapport au dispositif d'attelage (4), vers le haut depuis une première position. Cette première position est définie comme étant la position du tourillon (17a, 17b) à partir de laquelle le dispositif de rappel (21a, 21b) correspondant commence à emmagasiner de l'énergie, ou bien voit son énergie emmagasinée augmenter, du fait d'un déplacement du tourillon (17a, 17b) vers le haut par rapport au dispositif d'attelage (4). Chaque dispositif de rappel (21a, 21b) peut restituer cette énergie au tourillon (17a, 17b) correspondant en ramenant le tourillon (17a, 17b) vers la première position. En sus, chaque dispositif de rappel (21a, 21b) emmagasine de l'énergie lorsque le tourillon (17a, 17b) correspondant se déplace, par rapport au dispositif d'attelage (4), vers le bas depuis une deuxième position. Cette deuxième position est définie comme étant la position du tourillon (17a, 17b) à partir de laquelle le dispositif de rappel (21a, 21b) correspondant emmagasine de l'énergie, ou bien voit son énergie emmagasinée augmenter, du fait d'un déplacement du tourillon (17a, 17b) vers le bas par rapport au dispositif d'attelage (4). Chaque dispositif de rappel (21a, 21b) peut restituer cette énergie au tourillon (17a, 17b) correspondant en ramenant le tourillon (17a, 17b) vers la deuxième position.

Chaque dispositif de rappel (21a, 21b) comporte un premier moyen de rappel (22a, 22b). Le premier moyen de rappel (22a, 22b) emmagasine de l'énergie lorsque le tourillon (17a, 17b) correspondant se déplace, par rapport au dispositif d'attelage (4), vers le haut depuis la première position. Chaque premier moyen de rappel (22a, 22b) peut restituer cette énergie au tourillon (17a, 17b) correspondant en ramenant ce dernier vers la première position.

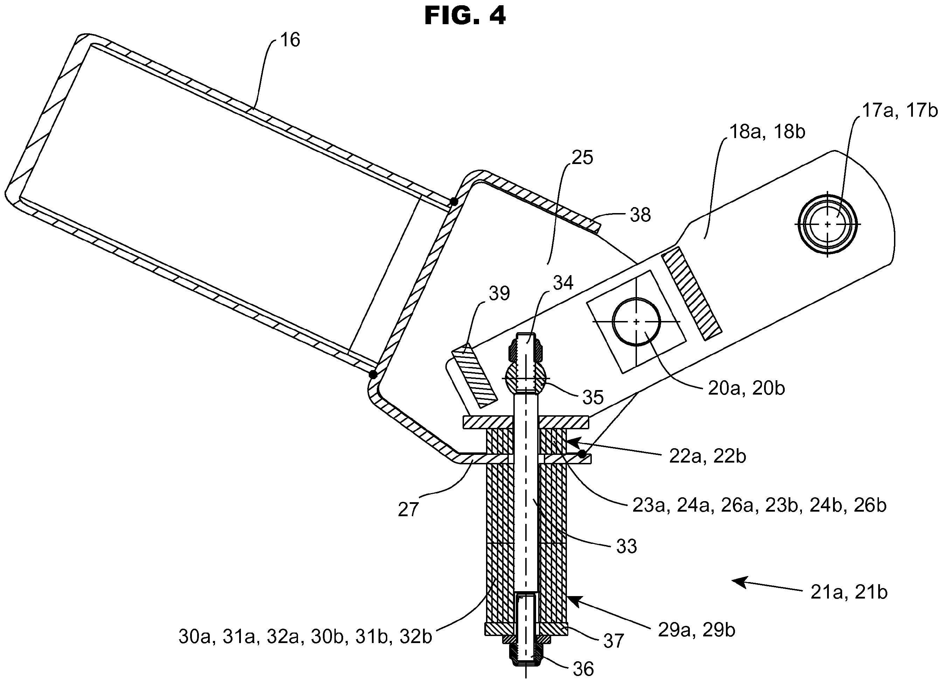

Chaque premier moyen de rappel (22a, 22b) comporte un premier élément élastiquement déformable (23a, 23b). La figure 2 illustre un premier exemple de réalisation d'un dispositif d'attelage (4) selon l'invention, dont une vue de détail est par ailleurs donnée à la figure 4. Dans cet exemple de réalisation, au moins un premier élément élastiquement déformable (23a, 23b) comporte un premier élément de compression (24a, 24b) agissant entre un support (25) du dispositif d'attelage (4) et un tourillon (17a, 17b) correspondants. Suivant un mode de réalisation non représenté, le premier élément élastiquement déformable (23a, 23b) pourrait comporter un ressort, par exemple un ressort en spirale. Le premier élément de compression (24a, 24b) pourrait comporter un ressort de compression en spirale, une rondelle conique ou un empilement de telles rondelles. Suivant un autre mode de réalisation non représenté, le premier élément élastiquement déformable (23a, 23b) pourrait comporter un ressort à lame orienté dans la direction d'avancement (A) de la machine (1). Ce ressort à lame serait relié d'une part à la pièce d'attelage (18a, 18b) correspondante et d'autre part au dispositif d'attelage (4).

Dans le premier exemple de réalisation, le premier élément élastiquement déformable (23a, 23b) comporte un tampon (26a, 26b) en matériau élastomère, par exemple un tampon en caoutchouc. Le tampon (26a, 26b) est intercalé entre une tôle inférieure (27) du support (25) et une extrémité de la pièce d'attelage (18a, 18b) opposée à l'autre extrémité portant le tourillon (17a, 17b). Lorsque le tourillon (17a, 17b) pivote vers le haut par rapport au dispositif d'attelage (4), le tampon (26a, 26b) se comprime de manière élastique et accumule de fait une énergie potentielle qu'il peut ensuite restituer au tourillon (17a, 17b) sous la forme d'un pivotement dudit tourillon (17a, 17b) vers le bas.

Par ailleurs, dans ce premier exemple de réalisation illustré à la figure 2, le dispositif de rappel (21a) agit indépendamment de l'autre dispositif de rappel (21b). En effet, le dispositif de rappel (21a) peut emmagasiner ou restituer de l'énergie au tourillon (17a) correspondant sans que nécessairement la même chose ne se produise avec l'autre dispositif de rappel (21b). On relèvera également que le tourillon (17a) peut se déplacer sans que ce déplacement n'implique nécessairement un déplacement de l'autre tourillon (17b).

Un deuxième exemple de réalisation d'un dispositif d'attelage (4) conforme à l'invention est représenté à la figure 3. Ce deuxième exemple de réalisation se distingue du premier par le fait qu'au moins un premier élément élastiquement déformable (23a, 23b) comporte une barre de torsion (28) reliée directement ou indirectement au dispositif d'attelage (4) et au tourillon (17a, 17b) correspondant. La vue de détail donnée à la figure 4 s'adresse également à ce deuxième exemple de réalisation. Dans cet exemple, la barre de torsion (28) est, à chacune de ses extrémités, solidaire de l'axe (20a, 20b) reliant la pièce d'attelage (18a, 18b) correspondante au dispositif d'attelage (4). La barre de torsion (28) est reliée indirectement au dispositif d'attelage (4) et aux tourillons (17a et 17b) via les pièces d'attelage (18a, 18b). La barre de torsion (28) pourrait aussi être liée directement au dispositif d'attelage (4). C'est ainsi que la barre de torsion (28) pourrait, dans sa partie centrale, être guidée dans un manchon du dispositif d'attelage (4) formant pivot.

Dans le deuxième exemple de réalisation représenté à la figure 3, un premier moyen de rappel (22a) se compose du premier élément de compression (24a) associé à un tourillon (17a), tandis que l'autre premier moyen de rappel (22b) se compose du premier élément de compression (24b) associé à l'autre tourillon (17b) ainsi que de la barre de torsion (28) reliant les deux pièces d'attelage (18a et 18b). La barre de torsion (28) peut emmagasiner et restituer de l'énergie quel que soit le sens dans lequel elle subit une torsion. Par conséquent, ledit autre premier moyen de rappel (22b) emmagasine de l'énergie également lorsque le tourillon (17b) correspondant se déplace, par rapport au dispositif d'attelage (4), vers le bas depuis la deuxième position. De plus, cet autre premier moyen de rappel (22b) peut restituer cette énergie au tourillon (17b) correspondant en ramenant le tourillon (17b) vers la deuxième position.

Dans un autre exemple de réalisation, non représenté, il serait envisageable qu'un premier moyen de rappel (22a) se compose d'un premier élément de compression (24a) agissant entre un tourillon (17a) et le support (25) correspondant, et que l'autre premier moyen de rappel (22b) se compose d'une barre de torsion (28) qui relie la pièce d'attelage (18a) portant ledit tourillon (17a) à l'autre tourillon (17b). Il serait également envisageable que chaque premier moyen de rappel (22a, 22b) comporte pour seul élément élastique une barre de torsion. Dans ce cas, chaque barre de torsion serait par exemple en liaison encastrement avec le dispositif d'attelage (4) dans une partie médiane de celui-ci. De plus, chaque barre de torsion s'étendrait depuis ladite partie médiane en direction d'une pièce d'attelage (18a, 18b) correspondante avec laquelle la barre serait liée.

Dans le deuxième exemple de réalisation de la figure 3, le dispositif de rappel (21a) interagit avec l'autre dispositif de rappel (21b). En effet, la barre de torsion (28) reliée aux deux pièces d'attelage (18a et 18b) implique que les déplacements du tourillon (17a) sont dans une certaine mesure transmis à l'autre tourillon (17b). En conséquence, une déformation du dispositif de rappel (21a) entraîne une déformation de l'autre dispositif de rappel (21b).

Selon une caractéristique importante de l'invention, au moins un des dispositifs de rappel (21a, 21b) comporte un deuxième moyen de rappel (29a, 29b). Le deuxième moyen de rappel (29a, 29b) emmagasine de l'énergie lorsque le tourillon (17a, 17b) correspondant se déplace, par rapport au dispositif d'attelage (4), vers le bas depuis la deuxième position. Le deuxième moyen de rappel (29a, 29b) peut restituer cette énergie au tourillon (17a, 17b) correspondant en ramenant le tourillon (17a, 17b) vers la deuxième position.

Au moins un deuxième moyen de rappel (29a, 29b) comporte un deuxième élément élastiquement déformable (30a, 30b). Ce dernier peut, par analogie avec le premier élément élastiquement déformable (23a, 23b), comporter un ressort en spirale ou à lame, ou encore un tampon (31a, 31b) en matériau élastomère. Cette liste n'est pas limitative. Dans les premier et deuxième exemples de réalisation, chaque dispositif de rappel (21a, 21b) comporte un deuxième moyen de rappel (29a, 29b). De plus, chaque deuxième moyen de rappel (29a, 29b) comporte un deuxième élément élastiquement déformable (30a, 30b). Dans les exemples de réalisation précités, celui-ci comporte un deuxième élément de compression (32a, 32b), en l'occurrence un tampon (31a, 31b) en matériau élastomère, agissant entre le support (25) du dispositif d'attelage (4) et le tourillon (17a, 17b) correspondants. Ainsi qu'il ressort de la figure 4, chaque dispositif de rappel (21a, 21b) comporte en outre une tige (33) disposée en parallèle du premier et du deuxième éléments élastiquement déformables (23a, 23b, 30a, 30b) correspondants. Une extrémité supérieure (34) de la tige (33) est reliée de manière articulée à la pièce d'attelage (18a, 18b) portant le tourillon (17a, 17b) correspondant. A cet effet, la tige (33) traverse un axe (35) au moyen duquel elle est reliée de manière pivotante à la pièce d'attelage (18a, 18b) correspondante. La tige (33) traverse le tampon (26a, 26b) du premier élément élastiquement déformable (23a, 23b). Un jeu suffisant entre la tige (33) et ce tampon (26a, 26b) est prévu pour permettre à la tige (33) de coulisser librement à l'intérieur dudit tampon (26a, 26b). La tige (33) traverse ensuite la tôle inférieure (27) du support (25) au sein duquel elle peut coulisser librement. La tige (33) traverse ensuite le tampon (31a, 31b) du deuxième élément élastiquement déformable (30a, 30b). A son extrémité inférieure (36) distante du tourillon (17a, 17b), la tige (33) porte une rondelle (37) de sorte que le deuxième élément élastiquement déformable (30a, 30b) en forme de tampon (31a, 31b) agisse entre la tôle inférieure (27) du support (25) et ladite extrémité inférieure (36). De la sorte, un pivotement vers le bas du tourillon (17a, 17b) par rapport au dispositif d'attelage (4) entraîne une compression du tampon (31a, 31b) du deuxième moyen de rappel (29a, 29b).

Une autre réalisation non représentée diffère de celle de la figure 4 par le fait que le dispositif de rappel (21a, 21b) comporte une tige supplémentaire coopérant avec le premier élément élastiquement déformable (23a, 23b). Dans ce cas, au lieu d'être intercalé entre la tôle inférieure (27) du support (25) et la pièce d'attelage (18a, 18b), le premier élément élastiquement déformable (23a, 23b) est placé au-dessus d'une tôle supérieure (38) du support (25). L'extrémité inférieure de la tige supplémentaire est articulée à la pièce d'attelage (18a, 18b) portant le tourillon (17a, 17b), d'une manière analogue à ce qui est prévu pour la tige (33) coopérant avec le deuxième élément élastiquement déformable (30a, 30b). Cette tige supplémentaire porte, à son extrémité supérieure distante du tourillon (17a, 17b), une rondelle et s'étend en parallèle du premier élément élastiquement déformable (23a, 23b) que, de préférence, elle traverse. De la sorte, le premier élément élastiquement déformable (23a, 23b) agit entre la tôle supérieure (38) du support (25) et ladite extrémité supérieure de la tige supplémentaire.

Suivant une caractéristique préférentielle de l'invention, le deuxième moyen de rappel (29a, 29b) associé à un tourillon (17a, 17b) présente une raideur plus faible que celle du premier moyen de rappel (22a, 22b) associé audit tourillon (17a, 17b). Dans les premier et deuxième exemples de réalisation, cette caractéristique est obtenue par le fait que chaque deuxième élément élastiquement déformable (30a, 30b) est réalisé dans un matériau de dureté sensiblement identique à celle du matériau composant le premier élément élastiquement déformable (23a, 23b) correspondant et par le fait que ledit deuxième élément élastiquement déformable (30a, 30b) présente une hauteur plus importante que ledit premier élément élastiquement déformable (23a, 23b). Le deuxième élément élastiquement déformable (30a, 30b) est par exemple constitué d'un empilement de plusieurs rondelles élastiquement déformables. Des raideurs différentes pourraient aussi être obtenues au moyen de matériaux de duretés différentes. La caractéristique suscitée contribue à réduire les contraintes mécaniques sur la machine (1), notamment lorsque celle-ci emprunte un virage. En pareil cas en effet, la machine (1) prend un certain roulis qui se traduit par le fait que la machine (1) est en appui sur son tourillon placé sur l'extérieur du virage, par exemple le tourillon (17a), tandis que le tourillon (17b) disposé sur l'intérieur du virage est dans une certaine mesure délesté. Ceci implique, dans les exemples de réalisation des figures, qu'une compression est subie par le premier élément de compression (24a) associé au tourillon (17a) extérieur au virage et par le deuxième élément de compression (32b) associé au tourillon (17b) intérieur. Etant donné que la raideur du deuxième élément de compression (32b) est plus faible que celle du premier (24a), le tourillon (17b) intérieur au virage peut, avec une relative facilité, pivoter vers le bas par rapport au dispositif d'attelage (4). A l'inverse, le tourillon (17a) extérieur au virage est fermement retenu par le premier élément de compression (24a) qui lui est associé en raison de la plus grande raideur de celui-ci. De cette manière, les dispositifs de rappel (21a et 21b) respectifs autorisent un certain roulis du dispositif d'attelage (4) de la machine (1) par rapport au tracteur (5), ce qui écarte le risque de contraintes mécaniques trop fortes sur la machine (1). Néanmoins, le roulis de la machine (1) demeure maîtrisé par l'effort résistant appliqué par le deuxième moyen de rappel (29b) sur le tourillon (17b) correspondant. De plus, en fin de virage, les tourillons (17a et 17b) sont ramenés vers la position qu'ils occupent en ligne droite grâce à l'effet de rappel généré par les dispositifs de rappel (21a et 21b) respectifs.

A la figure 4, le tourillon (17a, 17b) est représenté dans une position d'équilibre à vide, correspondant à la machine (1) non attelée au tracteur (5). Suivant une caractéristique préférentielle de l'invention, la première position et la deuxième position du tourillon (17a, 17b) sont confondues avec cette position d'équilibre. Le tourillon (17a, 17b) ne peut pas quitter librement cette position d'équilibre, car il est soumis à la fois à l'effort résistant du premier moyen de rappel (22a, 22b) et à celui du deuxième moyen de rappel (29a, 29b). Pour obtenir cet effet, les premier et deuxième éléments de compression (24a, 24b, 32a, 32b) visibles à la figure 4 peuvent par exemple être légèrement précontraints dans la position d'équilibre. De la sorte, lorsqu'en raison des mouvements de la machine (1) attelée au tracteur (5), le tourillon (17a, 17b) quitte cette position d'équilibre et pivote vers le haut, le premier élément de compression (24a, 24b) voit son énergie emmagasinée augmenter. Il en est de même du deuxième élément de compression (32a, 32b) lorsque le tourillon (17a, 17b) quitte la position d'équilibre et pivote vers le bas. Il est également possible que les longueurs respectives des premier et deuxième éléments de compression (24a, 24b, 32a, 32b) dans la position d'équilibre soient sensiblement égales à leurs longueurs libres respectives. Dans ce cas, l'énergie emmagasinée par les premier et deuxième éléments de compression (24a, 24b, 32a, 32b) dans la position d'équilibre, est sensiblement nulle. Le premier élément de compression (24a, 24b) commence à emmagasiner de l'énergie lorsque le tourillon (17a, 17b) se déplace vers le haut par rapport au dispositif d'attelage (4). Il en est de même du deuxième élément de compression (32a, 32b) lorsque le tourillon (17a, 17b) se déplace vers le bas.

Ainsi qu'il ressort encore de la figure 4, chaque pièce d'attelage (18a, 18b) est liée à une butée (39). Lorsque chaque tourillon (17a, 17b) se déplace, par rapport au dispositif d'attelage (4), vers le bas depuis la deuxième position, la déformation du dispositif de rappel (21a, 21b) correspondant est limitée par ladite butée (39) venant en appui contre le support (25) correspondant du dispositif d'attelage (4). En particulier, il se déduit de la figure 4 que la compression du deuxième élément élastiquement déformable (30a, 30b) est maximale lorsque la butée (39) vient en contact avec la tôle supérieure (38) du support (25). Sur les figures 2 et 3, le tourillon (17b) et le dispositif de rappel (21b) sont représentés dans cette configuration où la butée (39) est en appui contre la tôle supérieure (38). On distingue notamment que le deuxième élément élastiquement déformable (30b) correspondant est plus court que l'autre deuxième élastiquement déformable (30a). De la sorte, des contraintes mécaniques excessives sur le dispositif de rappel (21a, 21b) sont évitées.

Il est bien évident que l'invention n'est pas limitée aux exemples de réalisation décrits ci-dessus et représentés sur les figures annexées. Des modifications restent possible dans la limite définie par les revendications.

## Revendications

1. Machine de fenaison comportant un châssis (2) supporté directement ou indirectement au sol par des roues (6) et au moins un dispositif de travail (11) relié au châssis (2), le châssis (2) comportant un dispositif d'attelage (4) auquel sont articulées deux pièces d'attelage (18a, 18b) portant chacune un tourillon (17a, 17b) pour l'attelage aux bras inférieurs respectifs d'un tracteur (5), chaque pièce d'attelage (18a, 18b) coopérant avec un dispositif de rappel (21a, 21b) respectif, chaque dispositif de rappel (21a, 21b) emmagasinant de l'énergie lorsque le tourillon (17a, 17b) correspondant se déplace, par rapport au dispositif d'attelage (4), vers le haut depuis une première position, et chaque dispositif de rappel (21a, 21b) pouvant restituer cette énergie au tourillon (17a, 17b) correspondant en ramenant le tourillon (17a, 17b) vers la première position, ***caractérisée en ce que*** chaque dispositif de rappel (21a, 21b) emmagasine de l'énergie lorsque le tourillon (17a, 17b) correspondant se déplace, par rapport au dispositif d'attelage (4), vers le bas depuis une deuxième position, et que chaque dispositif de rappel (21a, 21b) peut restituer cette énergie au tourillon (17a, 17b) correspondant en ramenant le tourillon (17a, 17b) vers la deuxième position.

2. Machine de fenaison selon la revendication 1, ***caractérisée en ce que*** chaque pièce d'attelage (18a, 18b) est articulée au dispositif d'attelage (4) au moyen d'un axe (20a, 20b) sensiblement horizontal et sensiblement perpendiculaire à une direction d'avancement (A) de la machine.

3. Machine de fenaison selon la revendication 1 ou 2, ***caractérisée en ce que*** chaque dispositif de rappel (21a, 21b) agit indépendamment de l'autre dispositif de rappel (21a, 21b).

4. Machine de fenaison selon la revendication 1 ou 2, ***caractérisée en ce que*** chaque dispositif de rappel (21a, 21b) interagit avec l'autre dispositif de rappel (21a, 21b).

5. Machine de fenaison selon l'une quelconque des revendications 1 à 4, ***caractérisée en ce que*** chaque dispositif de rappel (21a, 21b) comporte un premier moyen de rappel (22a, 22b), que le premier moyen de rappel (22a, 22b) emmagasine de l'énergie lorsque le tourillon (17a, 17b) correspondant se déplace, par rapport au dispositif d'attelage (4), vers le haut depuis la première position, et que chaque premier moyen de rappel (22a, 22b) peut restituer cette énergie au tourillon (17a, 17b) correspondant en ramenant le tourillon (17a, 17b) vers la première position.

6. Machine de fenaison selon la revendication 5, ***caractérisée en ce qu'au*** moins un des premiers moyens de rappel (22a, 22b) emmagasine de l'énergie lorsque le tourillon (17a, 17b) correspondant se déplace, par rapport au dispositif d'attelage (4), vers le bas depuis la deuxième position, et que ledit premier moyen de rappel (22a, 22b) peut restituer cette énergie au tourillon (17a, 17b) correspondant en ramenant le tourillon (17a, 17b) vers la deuxième position.

7. Machine de fenaison selon la revendication 5, ***caractérisée en ce qu'au*** moins un des dispositifs de rappel (21a, 21b) comporte un deuxième moyen de rappel (29a, 29b), que ledit deuxième moyen de rappel (29a, 29b) emmagasine de l'énergie lorsque le tourillon (17a, 17b) correspondant se déplace, par rapport au dispositif d'attelage (4), vers le bas depuis la deuxième position, et que ledit deuxième moyen de rappel (29a, 29b) peut restituer cette énergie au tourillon (17a, 17b) correspondant en ramenant le tourillon (17a, 17b) vers la deuxième position.

8. Machine de fenaison selon l'une quelconque des revendications 1 à 7, ***caractérisée en ce que*** la première position et la deuxième position de chaque tourillon (17a, 17b) sont confondues.

9. Machine de fenaison selon l'une quelconque des revendications 5 à 8, ***caractérisée en ce que*** chaque premier moyen de rappel (22a, 22b) comporte un premier élément élastiquement déformable (23a, 23b).

10. Machine de fenaison selon la revendication 7, ***caractérisée en ce qu***'au moins un deuxième moyen de rappel (29a, 29b) comporte un deuxième élément élastiquement déformable (30a, 30b).

11. Machine de fenaison selon la revendication 9, ***caractérisée en ce qu***'au moins un premier élément élastiquement déformable (23a, 23b) comporte un premier élément de compression (24a, 24b) agissant entre un support (25) du dispositif d'attelage (4) et un tourillon (17a, 17b) correspondants.

12. Machine de fenaison selon la revendication 9, ***caractérisée en ce qu'**au* moins un premier élément élastiquement déformable (23a, 23b) comporte une barre de torsion (28) reliée directement ou indirectement au dispositif d'attelage (4) et au tourillon (17a, 17b) correspondant.

13. Machine de fenaison selon la revendication 10, ***caractérisée en ce que*** le deuxième élément élastiquement déformable (30a, 30b) comporte un deuxième élément de compression (32a, 32b) agissant entre un (le) support (25) du dispositif d'attelage (4) et un tourillon (17a, 17b) correspondants.

14. Machine de fenaison selon la revendication 9 ou 10, ***caractérisée en ce que*** le premier et/ou le deuxième élément élastiquement déformable (23a, 23b, 30a, 30b) comporte un tampon (26a, 26b, 31a, 31b) en matériau élastomère.

15. Machine de fenaison selon l'une quelconque des revendications 9 à 14, ***caractérisée en ce qu'***au moins un des dispositifs de rappel (21a, 21b) comporte au moins une tige (33) disposée en parallèle du premier et/ou du deuxième élément élastiquement déformable (23a, 23b, 30a, 30b) correspondant, qu'une extrémité (34) de la tige (33) est reliée à la pièce d'attelage (18a, 18b) correspondante et que le premier et/ou le deuxième élément élastiquement déformable (23a, 23b, 30a, 30b) agit entre un (le) support (25) correspondant du dispositif d'attelage (4) et une autre extrémité (36) de la tige (33) distante du tourillon (17a, 17b) correspondant.

16. Machine de fenaison selon la revendication 15, ***caractérisée en ce que*** la tige (33) traverse le premier et/ou le deuxième élément élastiquement déformable (23a, 23b, 30a, 30b) correspondant.

17. Machine de fenaison selon la revendication 15 ou 16, ***caractérisée en ce que*** la tige (33) est articulée à la pièce d'attelage (18a, 18b) correspondante.

18. Machine de fenaison selon les revendications 5 et 7, ***caractérisée en ce que*** le deuxième moyen de rappel (29a, 29b) associé à un tourillon (17a, 17b) présente une raideur plus faible que celle du premier moyen de rappel (22a, 22b) associé audit tourillon (17a, 17b).

19. Machine de fenaison selon l'une quelconque des revendications 1 à 18, ***caractérisée en ce que*** chaque pièce d'attelage (18a, 18b) est liée à une butée (39), et qu'une déformation de chaque dispositif de rappel (21a, 21b), lorsque le tourillon (17a, 17b) correspondant se déplace, par rapport au dispositif d'attelage (4), vers le bas depuis la deuxième position, est limitée par ladite butée (39) en appui contre un (le) support (25) du dispositif d'attelage (4).

## Patentansprüche

1. Heuwerbungsmaschine mit einem Rahmen (2), der direkt oder indirekt von Rädern (6) am Boden gestützt wird, und mindestens einer Arbeitsvorrichtung (11), die mit dem Rahmen (2) verbunden ist, wobei der Rahmen (2) eine Kupplungsvorrichtung (4) umfasst, an der zwei Kupplungsteile (18a, 18b) angelenkt sind, die jeweils einen Zapfen (17a, 17b) für die Kupplung an die jeweiligen unteren Arme eines Traktors (5) tragen, wobei jedes Kupplungsteil (18a, 18b) mit einer jeweiligen Rückstellvorrichtung (21 a, 21b) zusammenwirkt, wobei jede Rückstellvorrichtung (21 a, 21b) Energie speichert, wenn sich der entsprechende Zapfen (17a, 17b) in Bezug auf die Kupplungsvorrichtung (4) aus einer ersten Stellung nach oben verschiebt, und wobei jede Rückstellvorrichtung (21a, 21b) diese Energie an den entsprechenden Zapfen (17a, 17b) wieder abgeben kann, indem der Zapfen (17a, 17b) in die erste Stellung zurückgebracht wird, ***dadurch gekennzeichnet, dass*** jede Rückstellvorrichtung (21a, 21b) Energie speichert, wenn sich der entsprechende Zapfen (17a, 17b) in Bezug auf die Kupplungsvorrichtung (4) aus einer zweiten Stellung nach unten verschiebt, und dass jede Rückstellvorrichtung (21a, 21b) diese Energie an den entsprechenden Zapfen (17a, 17b) wieder zurückgeben kann, indem der Zapfen (17a, 17b) in die zweite Stellung zurückgebracht wird.

2. Heuwerbungsmaschine nach Anspruch 1, ***dadurch gekennzeichnet, dass*** jedes Kupplungsteil (18a, 18b) an der Kupplungsvorrichtung (4) mittels einer Achse (20a, 20b) angelenkt ist, die im Wesentlichen horizontal und im Wesentlichen senkrecht zu einer Vorschubrichtung (A) der Maschine verläuft.

3. Heuwerbungsmaschine nach Anspruch 1 oder 2, ***dadurch gekennzeichnet, dass*** jede Rückstellvorrichtung (21a, 21b) unabhängig von der anderen Rückstellvorrichtung (21 a, 21 b) wirkt.

4. Heuwerbungsmaschine nach Anspruch 1 oder 2, ***dadurch gekennzeichnet, dass*** jede Rückstellvorrichtung (21a, 21b) mit der anderen Rückstellvorrichtung (21 a, 21 b) zusammenwirkt.

5. Heuwerbungsmaschine nach irgend einem der Ansprüche 1 bis 4, ***dadurch gekennzeichnet, dass*** jede Rückstellvorrichtung (21a, 21b) ein erstes Rückstellmittel (22a, 22b) umfasst, dass das erste Rückstellmittel (22a, 22b) Energie speichert, wenn sich der entsprechende Zapfen (17a, 17b) in Bezug auf die Kupplungsvorrichtung (4) aus der ersten Stellung nach oben verschiebt, und dass jedes erste Rückstellmittel (22a, 22b) diese Energie an den entsprechenden Zapfen (17a, 17b) wieder abgeben kann, indem der Zapfen (17a, 17b) in die erste Stellung zurückgebracht wird.

6. Heuwerbungsmaschine nach Anspruch 5, ***dadurch gekennzeichnet, dass*** mindestens eines der ersten Rückstellmittel (22a, 22b) Energie speichert, wenn sich der entsprechende Zapfen (17a, 17b) in Bezug auf die Kupplungsvorrichtung (4) aus der zweiten Stellung nach unten verschiebt, und dass das erste Rückstellmittel (22a, 22b) diese Energie an den entsprechenden Zapfen (17a, 17b) wieder abgeben kann, indem der Zapfen (17a, 17b) in die zweite Stellung zurückgebracht wird.

7. Heuwerbungsmaschine nach Anspruch 5, ***dadurch gekennzeichnet, dass*** mindestens eine der Rückstellvorrichtungen (21a, 21b) ein zweites Rückstellmittel (29a, 29b) umfasst, dass das zweite Rückstellmittel (29a, 29b) Energie speichert, wenn sich der entsprechende Zapfen (17a, 17b) in Bezug auf die Kupplungsvorrichtung (4) aus der zweiten Stellung nach unten verschiebt, und dass das zweite Rückstellmittel (29a, 29b) diese Energie an den entsprechenden Zapfen (17a, 17b) wieder abgeben kann, indem der Zapfen (17a, 17b) in die zweite Stellung zurückgebracht wird.

8. Heuwerbungsmaschine nach irgend einem der Ansprüche 1 bis 7, ***dadurch gekennzeichnet, dass*** die erste Stellung und die zweite Stellung jedes Zapfens (17a, 17b) zusammenfallen.

9. Heuwerbungsmaschine nach irgend einem der Ansprüche 5 bis 8, ***dadurch gekennzeichnet, dass*** jedes erste Rückstellmittel (22a, 22b) ein erstes elastisch verformbares Element (23a, 23b) umfasst.

10. Heuwerbungsmaschine nach Anspruch 7, ***dadurch gekennzeichnet, dass*** mindestens ein zweites Rückstellmittel (29a, 29b) ein zweites elastisch verformbares Element (30a, 30b) umfasst.

11. Heuwerbungsmaschine nach Anspruch 9, ***dadurch gekennzeichnet, dass*** mindestens ein erstes elastisch verformbares Element (23a, 23b) ein erstes Druckelement (24a, 24b) umfasst, das zwischen einer Stütze (25) der Kupplungsvorrichtung (4) und einem entsprechenden Zapfen (17a, 17b) wirkt.

12. Heuwerbungsmaschine nach Anspruch 9, ***dadurch gekennzeichnet, dass*** mindestens ein erstes elastisch verformbares Element (23a, 23b) einen Torsionsstab (28) umfasst, der direkt oder indirekt mit der Kupplungsvorrichtung (4) und dem entsprechenden Zapfen (17a, 17b) verbunden ist.

13. Heuwerbungsmaschine nach Anspruch 10, ***dadurch gekennzeichnet, dass*** das zweite elastisch verformbare Element (30a, 30b) ein zweites Druckelement (32a, 32b) umfasst, das zwischen einer (der) entsprechenden Stütze (25) der Kupplungsvorrichtung (4) und einem entsprechenden Zapfen (17a, 17b) wirkt.

14. Heuwerbungsmaschine nach Anspruch 9 oder 10, ***dadurch gekennzeichnet, dass*** das erste und/oder zweite elastisch verformbare Element (23a, 23b, 30a, 30b) einen Elastomerpuffer (26a, 26b, 31a, 31b) umfasst.

15. Heuwerbungsmaschine nach irgend einem der Ansprüche 9 bis 14, ***dadurch gekennzeichnet, dass*** mindestens eine der Rückstellvorrichtungen (21a, 21b) mindestens eine Stange (33) umfasst, die parallel zum entsprechenden ersten und/oder zweiten elastisch verformbaren Element (23a, 23b, 30a, 30b) angeordnet ist, dass ein Ende (34) der Stange (33) mit dem entsprechenden Kupplungsteil (18a, 18b) verbunden ist, und dass das erste und/oder das zweite elastisch verformbare Element (23a, 23b, 30a, 30b) zwischen einer (der) entsprechenden Stütze (25) der Kupplungsvorrichtung (4) und einem anderen Ende (36) der Stange (33) wirkt, das vom entsprechenden Zapfen (17a, 17b) beabstandet ist.

16. Heuwerbungsmaschine nach Anspruch 15, ***dadurch gekennzeichnet, dass*** die Stange (33) das entsprechende erste und/oder zweite elastisch verformbare Element (23a, 23b, 30a, 30b) durchquert.

17. Heuwerbungsmaschine nach Anspruch 15 oder 16, ***dadurch gekennzeichnet, dass*** die Stange (33) am entsprechenden Kupplungsteil (18a, 18b) angelenkt ist.

18. Heuwerbungsmaschine nach Anspruch 5 und 7, ***dadurch gekennzeichnet, dass*** das zweite Rückstellmittel (29a, 29b), das mit einem Zapfen (17a, 17b) vereint ist, eine geringere Steifigkeit aufweist als jene des ersten Rückstellmittels (22a, 22b), das mit dem Zapfen (17a, 17b) vereint ist.

19. Heuwerbungsmaschine nach irgend einem der Ansprüche 1 bis 18, ***dadurch gekennzeichnet, dass*** jedes Kupplungsteil (18a, 18b) mit einem Anschlag (39) verbunden ist, und dass, wenn sich der entsprechende Zapfen (17a, 17b) in Bezug auf die Kupplungsvorrichtung (4) ausgehend von der zweiten Stellung nach unten verschiebt, eine Verformung jeder Rückstellvorrichtung (21a, 21b) durch den Anschlag (39) begrenzt wird, der gegen eine (die) Stütze (25) der Kupplungsvorrichtung (4) drückt.

## Claims

1. Haymaking machine including a chassis (2) supported directly or indirectly on the ground by wheels (6) and at least one working device (11) connected to the chassis (2), the chassis (2) including a coupling device (4) to which two hitching pieces (18a, 18b) are articulated each bearing a hitching pin (17a, 17b) for the hitching to the respective lower arms of a tractor (5), each hitching piece (18a, 18b) cooperating with a respective return device (21 a, 21b), each return device (21 a, 21b) storing energy when the corresponding hitching pin (17a, 17b) moves, relative to the coupling device (4), upward from a first position, and each return device (21a, 21b) being able to release that energy to the corresponding hitching pin (17a, 17b) by returning the hitching pin (17a, 17b) toward the first position, ***characterized in* that** each return device (21 a, 21 b) stores energy when the corresponding hitching pin (17a, 17b) moves, relative to the coupling device (4), downward from a second position, and that each return device (21a, 21b) can release that energy to the corresponding hitching pin (17a, 17b) by returning the hitching pin (17a, 17b) toward the second position.

2. Haymaking machine according to claim 1, ***characterized in* that** each hitching piece (18a, 18b) is articulated to the coupling device (4) by means of a substantially horizontal axis (20a, 20b) substantially perpendicular to a direction of advance (A) of the machine.

3. Haymaking machine according to claim 1 or 2, ***characterized in* that** each return device (21 a, 21b) acts independently of the other return device (21a, 21b).

4. Haymaking machine according to claim 1 or 2, ***characterized in* that** each return device (21 a, 21 b) interacts with the other return device (21 a, 21b).

5. Haymaking machine according to any one of claims 1 to 4, ***characterized in* that** each return device (21 a, 21 b) includes a first return means (22a, 22b), that the first return means (22a, 22b) stores energy when the corresponding hitching pin (17a, 17b) moves, relative to the coupling device (4), upward from the first position, and that each first return means (22a, 22b) can release that energy to the corresponding hitching pin (17a, 17b) by returning the hitching pin (17a, 17b) toward the first position.

6. Haymaking machine according to claim 5, ***characterized in* that** at least one of the first return means (22a, 22b) stores energy when the corresponding hitching pin (17a, 17b) moves, relative to the coupling device (4), downward from the second position, and that each first return means (22a, 22b) can release that energy to the corresponding hitching pin (17a, 17b) by returning the hitching pin (17a, 17b) toward the second position.

7. Haymaking machine according to claim 5, ***characterized in* that** at least one of the return devices (21a, 21b) includes a second return means (29a, 29b), that the said second return means (29a, 29b) stores energy when the corresponding hitching pin (17a, 17b) moves, relative to the coupling device (4), downward from the second position, and that the said second return means (29a, 29b) can release that energy to the corresponding hitching pin (17a, 17b) by returning the hitching pin (17a, 17b) toward the second position.

8. Haymaking machine according to any one of claims 1 to 7, ***characterized in* that** the first position and the second position of each hitching pin (17a, 17b) are coincident.

9. Haymaking machine according to any one of claims 5 to 8, ***characterized in* that** each first return means (22a, 22b) includes a first elastically deformable element (23a, 23b).

10. Haymaking machine according to claim 7, ***characterized in* that** at least one second return means (29a, 29b) includes a second elastically deformable element (30a, 30b).

11. Haymaking machine according to claim 9, ***characterized in* that** at least one first elastically deformable element (23a, 23b) includes a first compression element (24a, 24b) acting between a corresponding support (25) of the coupling device (4) and a corresponding hitching pin (17a, 17b).

12. Haymaking machine according to claim 9, ***characterized in* that** at least one first elastically deformable element (23a, 23b) includes a torsion bar (28) directly or indirectly connected to the coupling device (4) and to the corresponding hitching pin (17a, 17b).

13. Haymaking machine according to claim 10, ***characterized in* that** the second elastically deformable element (30a, 30b) includes a second compression element (32a, 32b) acting between a (the) corresponding support (25) of the coupling device (4) and a corresponding hitching pin (17a, 17b).

14. Haymaking machine according to claim 9 or 10, ***characterized in* that** the first and/or second elastically deformable element (23a, 23b, 30a, 30b) includes a pad (26a, 26b, 31a, 31b) of elastomer material.

15. Haymaking machine according to any one of claims 9 to 14, ***characterized in* that** at least one of the return devices (21 a, 21b) includes at least one rod (33) positioned parallel to the corresponding first and/or second elastically deformable element (23a, 23b, 30a, 30b), that one end (34) of the rod (33) is connected to the corresponding hitching piece (18a, 18b), and that the first and/or second elastically deformable element (23a, 23b, 30a, 30b) acts between a (the) corresponding support (25) of the coupling device (4) and another end (36) of the rod (33) away from the corresponding hitching pin (17a, 17b).

16. Haymaking machine according to claim 15, ***characterized in* that** the rod (33) passes through the corresponding first and/or second elastically deformable element (23a, 23b, 30a, 30b).

17. Haymaking machine according to claim 15 or 16, ***characterized in* that** the rod (33) is articulated to the corresponding hitching piece (18a, 18b).

18. Haymaking machine according to claims 5 and 7, ***characterized in* that** the second return means (29a, 29b) associated with a hitching pin (17a, 17b) has a lower stiffness than that of the first return means (22a, 22b) associated with the said hitching pin (17a, 17b).

19. Haymaking machine according to any one of claims 1 to 18, ***characterized in* that** each hitching piece (18a, 18b) is connected to a stop (39), and that a distortion of each return device (21a, 21b), when the corresponding hitching pin (17a, 17b) moves, relative to the coupling device (4), downward from the second position, is limited by the said stop (39) bearing against a (the) support (25) of the coupling device (4).
